# EUROPEAN PATENT APPLICATION

(11) **EP 4 512 239 A1**
(43) Date of publication of application: **26.02.2025**
(21) Application number: 23920282.3
(22) Date of filing: 26.10.2023
(51) Int. Cl.: A01K 7/00

(54) **PET WATER DISPENSER**

(30) Priority: 06.07.2023 CN 202321759983 U
(71) Applicant: PETKIT NETWORK TECHNOLOGY (SHANGHAI) CO., LTD., Shanghai 201100 (CN)
(72) Inventor: The designation of the inventor has not yet been filed
(74) Representative: Cabinet Beaumont
(86) International application number: PCT/CN2023/126807
(87) International publication number: WO 2025/007454

(57) **Abstract**

Provided is a pet water dispenser. The pet water dispenser includes a water storage tray, a filter structure, filter cotton, a water tank and a water pump. The filter rack is located below the water storage tray, the filter rack is formed with a filter structure, and the filter structure is configured to receive and filter water overflowing from the water storage tray. The filtration precision of the filter structure is less than the filtration precision of the filter cotton, and the filter cotton is configured to re-filter water filtered by the filter structure. The water tank is located below the filter cotton. The water pump is configured to pump water within the water tank to the water storage tray.

## Description

This application claims priority to Chinese Patent Application No. 202321759983.8 filed on Jul. 06, 2023, the disclosure of which is incorporated herein by reference in its entirety.

### TECHNICAL FIELD

The present application relates to the technical field of pet water dispensers, for example, a pet water dispenser.

### BACKGROUND

As people are busy with work and life, pet drinking water is not always renewed timely, causing pets to feel uncomfortable or sick. Moreover, if the pet drinking water is not renewed for a long time, the water quality will become smelly, or mosquitos will be produced. Therefore, water at the bottom of the water tank is usually pumped to a water storage basin on the top of the water tank by using a water pump so that water in the water storage basin can overflow. After filtered by filter cotton, the overflowed water returns to the water tank again, thereby serving to clean the water in the water storage basin.

However, when drinking, pets may have hair and dirt into the water storage basin when drinking water. During filtration, such impurities adhere to the surface of the filter cotton, causing a mucosa on the surface of the filter cotton. This affects the filtration function of the filter cotton and is likely to produce an unpleasant odor. Therefore, the filter cotton is required to be cleaned regularly. However, the filter cotton has a reduced filtration effect after cleaning, thereby shortening the service life of the filter cotton, and the cost of replacing the filter cotton is relatively high.

### SUMMARY

The present application provides a pet water dispenser that can not only filter pet drinking water but also prevent large particles of dirt and hair from piling up on filter cotton, slow down a sticky phenomenon on the surface of the filter cotton and prolong the service life of the filter cotton.

An embodiment of the present application provides a pet water dispenser. The pet water dispenser includes a water storage tray, a filter rack, filter cotton, a water tank and a water pump. The filter rack is located below the water storage tray, the filter rack is formed with a filter structure, and the filter structure is configured to receive and filter water overflowing from the water storage tray. A filtration precision of the filter structure is less than a filter precision of the filter cotton, and the filter cotton is configured to re-filter water filtered by the filter structure. The water tank is located below the filter cotton. The water pump is configured to pump water within the water tank to the water storage tray.

### BRIEF DESCRIPTION OF DRAWINGS

FIG. 1 is a side cross-sectional view of a pet water dispenser according to an embodiment of the present application.
FIG. 2 is an exploded view of a pet water dispenser according to an embodiment of the present application.
FIG. 3 is a partial enlarged view of part B in FIG. 1.
FIG. 4 is a partial enlarged view of part A in FIG. 1.

### Reference list

- 1: water storage tray
- 2: filter rack
- 3: filter cotton
- 4: filter element rack
- 5: support rack
- 6: water pump
- 7: water overflow outlet
- 8: limit surface
- 9: placement cavity
- 10: water tank
- 11: upper cover
- 12: water inlet channel
- 13: water pipe
- 14: water supply mouth
- 15: dust cover
- 16: lower housing
- 17: operation portion
- 18: tray flange
- 19: water inlet plate
- 20: latch
- 21: notch

### DETAILED DESCRIPTION

In the description of the present application, terms "joined", "connected" and "fixed" are to be understood in a broad sense unless otherwise expressly specified and limited. For example, the term "connected" may refer to "fixedly connected", "detachably connected", or "integrated", may refer to "mechanically connected" or "electrically connected", or may refer to "connected directly", "connected indirectly through an intermediary", or "connected inside two elements" or "an interaction relation between two elements". For those of ordinary skill in the art, specific meanings of the preceding terms in the present application may be understood based on specific situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below" or "underneath" the second feature, the first feature is right under, below or underneath the second feature, the first feature is obliquely under, below or underneath the second feature, or the first feature is simply at a lower level than the second feature.

In the description of this application, orientations or position relations indicated by terms such as "above", "below", "right" and the like are based on orientations or position relations shown in the drawings. These orientations or position relations are intended to facilitate the description and simplify an operation, and not to indicate or imply that a device or element referred to must have such specific orientations or must be configured or operated in such specific orientations. Thus, these orientations or position relations are not to be construed as limiting the present application. In addition, the terms "first" and "second" are used for distinguishing between descriptions and have no special meaning.

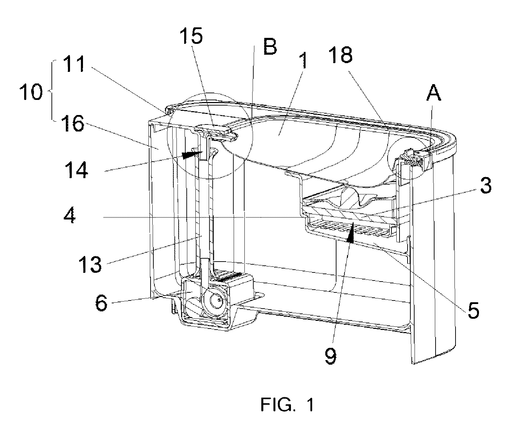

As shown in FIGS. 1 to 4, this embodiment provides a pet water dispenser. The pet water dispenser includes a water storage tray 1, a filter rack 2, filter cotton 3, a water tank 10 and a water pump 6. The filter rack 2 is located below the water storage tray 1, the filter rack 2 is formed with a filter structure, and the filter structure is configured to receive and filter water overflowing from the water storage tray 1. The filtration precision of the filter structure is less than the filtration precision of the filter cotton 3, and the filter cotton 3 is configured to re-filter water filtered by the filter structure. The water tank 10 is located below the filter cotton 3. The water pump 6 is configured to pump water within the water tank 10 to the water storage tray 1.

The water pump 6 pumps the water within the water tank 10 to the water storage tray 1. When the water overflowing from the water storage tray 1 flows to the filter rack 2, the filter structure on the filter rack 2 preliminarily filters the water that overflows to the filter rack 2, mainly filtering out hair, large particles and others. After filtered by the filter structure, the water flows to the filter cotton 3 below the filter rack 2. Taking advantage of the filtration precision of the filter structure being less than the filtration precision of the filter cotton 3, the filter cotton 3 is used for re-filtration. Since the large particles and the hair in the water have been filtered out by the filter structure before the filter cotton 3, the hair and the large particles can be prevented from adhering to the filter cotton 3 effectively. The water filtered by the filter cotton 3 flows to the water tank 10, slowing down the cleaning frequency of the filter cotton 3 and prolonging the service life of the filter cotton 3.

In an embodiment, the filter rack 2 is provided with multiple through holes extending from top to bottom, and the multiple through holes form the filter structure. Large particles and hair cannot pass through the multiple through holes so that the large particles and the hair in the water can be filtered out. The multiple through holes allow a larger water flow to pass through the filter rack 2 so that the filtration efficiency can be increased. Exemplarily, each of the multiple through holes is tapered holes having a narrow top and a wide bottom, which can not only play a filtration role but also prevent the multiple through holes from being clogged, allowing the water flow to pass through the multiple through holes quickly.

In an embodiment, the water storage tray 1 is provided with a water overflow outlet 7, the water overflow outlet 7 is higher than the lowest position of the inner wall of the water storage tray 1, and when reaching the height of the water overflow outlet 7, the water within the water storage tray 1 flows to the filter structure from the water overflow outlet 7.

In an embodiment, the water overflow outlet 7 is an elongated hole extending horizontally so that the water in the water storage tray 1 can overflow timely, thereby preventing the water in the water storage tray 1 from overflowing outside the pet water dispenser from the top of the water storage tray 1 due to untimely overflow.

In an embodiment, the water storage tray 1 is configured as an elliptical disc-shaped structure having a top opening, and the water overflow outlet 7 is disposed at one end of the water storage tray 1 in a long axial direction of the elliptical disc-shaped structure.

In an embodiment, the filter rack 2 is inclined with respect to a horizontal direction, and one end of the filter rack 2 close to the water overflow outlet 7 is higher than the other end of the filter rack 2 so that the water overflowing from the water overflow outlet 7 can cover the entire surface of the filter rack 2, increasing the area in which the filter rack 2 can contact the water flow and increasing the filtration effect.

In an embodiment, the water storage tray 1 is disposed on the top of the water tank 10, and the filter rack 2 and the filter cotton 3 are disposed within the water tank 10. The internal filter cotton 3 and filter rack 2 can be protected from external pollution, prolonging the service life, and the water storage tray 1 is disposed on the top of the water tank 10, facilitating drinking water by pets.

In an embodiment, the water storage tray 1 is detachably connected to the water tank 10, the filter rack 2 is detachably connected to the water tank 10, and a handle protrudes from one side of the filter rack 2 facing the water storage tray 1 so that the filter rack 2 can be taken out easily when cleaning.

In an embodiment, the filter rack 2 and the handle are formed integrally, the shape of the handle on the filter rack 2 may be any shape, and the filter bracket 2 is a plastic rack with a low cost.

The water tank 10 includes a lower housing 16 having a top opening and an upper cover 11 mounted onto the lower housing 16 to seal the top opening. The water storage tray 1 is mounted onto the upper cover 11. The water storage tray 1 is detachably connected to the upper cover 11. The filter rack 2 is detachably mounted within the lower housing 16.

In an embodiment, a circumferential edge of the top opening of the water storage tray 1 is provided with a tray flange 18, the upper cover 11 is provided with a penetrating hole extending along an up-down direction, a lower end of the water storage tray 1 passes through the penetrating hole and enters the water tank 10, the opening end surface of an upper end of the penetrating hole forms a tray support surface, and the tray flange 18 is located over the upper cover 11 and is supported by the tray support surface so that the upper cover 11 can support the water storage tray 1.

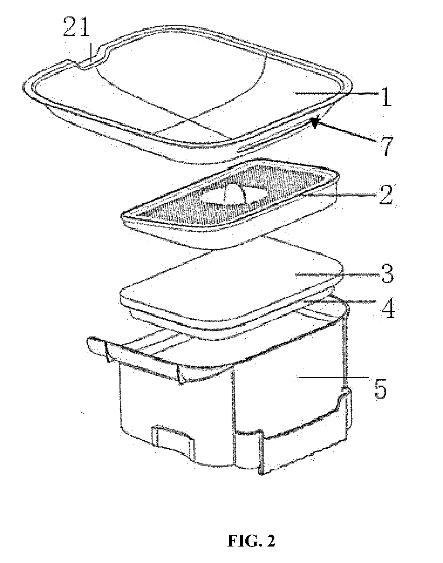

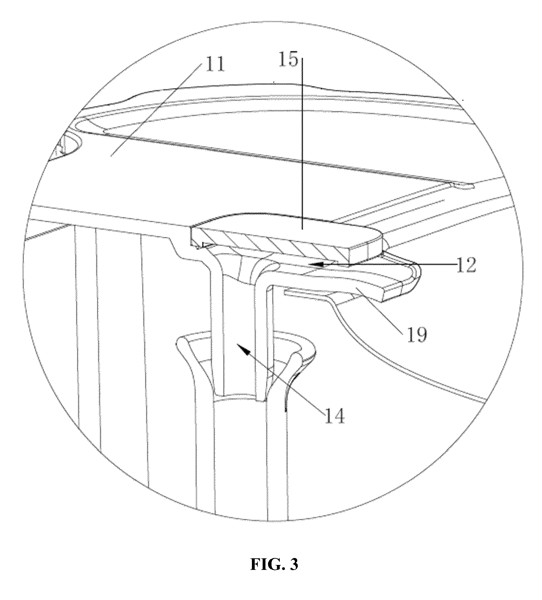

As shown in FIGS. 2 and 3, the tray flange 18 is formed with a notch 21 on a first side of the water storage tray 1 in the horizontal direction, the upper cover 11 is provided with a water inlet plate 19, the water inlet plate 19 passes through the notch 21 and extends into the water storage tray 1, and the water inlet plate 19 downward presses the inner bottom wall of the notch 21.

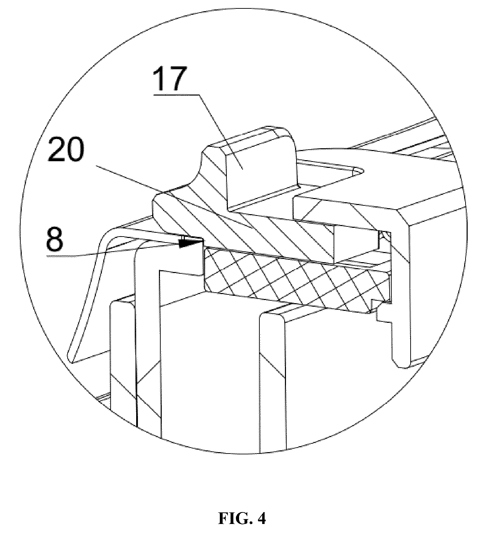

As shown in FIG. 4, a second side of the water storage tray 1 in the horizontal direction is clamped to the upper cover 11 through a latch 20, the latch 20 can slide along the horizontal direction with respect to the upper cover 11, the horizontal direction is the long axial direction of the elliptical disc-shaped structure, and the latch 20 and the notch 21 are located at two ends of the tray flange 18 in a preset horizontal direction respectively. Referring to FIG. 1, the horizontal direction is roughly a left-right direction as shown in FIG. 1.

A latch mounting space is formed between the upper cover 11 and the lower housing 16. The latch 20 extends along the horizontal direction. A right end of the latch 20 slides into the latch mounting space along the horizontal direction. The upper cover 11 is provided with an upper opening. A lower end of the upper opening communicates with the latch mounting space. A left end of the latch 20 extends out of the latch mounting space and downward presses the upper surface of the tray flange 18. An operation portion 17 protrudes from the upper surface of one end of the latch 20 extending out of the latch mounting space. The lower surface of the latch 20 forms the limit surface 8. The limit surface 8 can abut against the left sidewall of the upper opening along the preset horizontal direction, and the operation portion 17 can abut against the right sidewall of the upper opening along the horizontal direction.

When the pet water dispenser is in use, the limit surface 8 abuts against the left sidewall of the upper opening along the preset horizontal direction, the left end of the latch 20 presses the upper surface of the tray flange 18, and the operation portion 17 and the right sidewall of the upper opening are spaced apart so that the water storage tray 1 and the upper cover 11 can be clamped by the latch 20.

When it is necessary to disassemble the water storage tray 1, the operation portion 17 is pushed to the right to drive the latch 20 to slide to the right so that before the operation portion 17 abuts against the right sidewall of the upper opening or at the same time, the left end of the latch 20 can be completely detached from the tray flange 18, thereby causing a right side of the tray flange 18 to lose the limit on the latch 20. After the right side of the tray flange 18 is slightly lifted upward, the water storage tray 1 may be pulled to the right so that the water inlet plate 19 can come out of the notch 21, thereby disassembling the entire water storage tray 1.

In an embodiment, the upper cover 11 is provided with a water inlet channel 12, a first end of the water inlet channel 12 horizontally extends into the water storage tray 1, a water outlet of the water pump 6 is connected to a water pipe 13, and a water outlet of the water pipe 13 communicates with the water inlet channel 12. The upper cover 11 is directly provided with the water inlet channel 12, simplifying the entire structure of the pet water dispenser and reducing the number of parts.

In an embodiment, as shown in FIG. 3, a second end of the water inlet channel 12 forms a water supply mouth 14, the water supply mouth 14 passes through the upper cover 11 along a vertical direction, an upper end of the water pipe 13 communicates with the water supply mouth 14; the upper cover 11 is provided with a dust cover 15, and the dust cover 15 covers the end surface of a top opening of the water supply mouth 14. The dust cover 15 can prevent dust from entering the water supply mouth 14 to clog the water supply mouth 14.

In an embodiment, one end of the water inlet channel 12 is opened on the water inlet plate 19, the upper cover 11 is provided with a vertical pipe, the vertical pipe and the upper cover 11 are formed integrally, the inner cavity of the vertical pipe forms the preceding water supply mouth 14, a lower end of the vertical pipe is inserted into the upper end of the water pipe 13 so that when the upper cover 11 is convenient to disassemble, the vertical pipe can come out of the upper end of the water pipe 13.

In an embodiment, the pet water dispenser further includes a filter element rack 4. The filter element rack 4 is located under the filter cotton 3, and a placement cavity 9 is formed between the filter element rack 4 and the filter cotton 3 and is configured to place a charcoal pack. When placed within the placement cavity, the charcoal pack may be used for absorbing and filtering the water filtered by the filter cotton 3, improving the quality of the filtered water.

In an embodiment, the water tank 10 further includes a support rack 5, the support rack 5 is connected to the lower housing 16, a circumferential edge of the filter element rack 4 is provided with a support flange, the inner wall of the support rack 5 is provided with the support surface configured to support the support flange; a circumferential edge of the filter rack 2 presses a circumferential edge of the filter cotton 3 against the upper surface of the support flange. With this design, the support rack 5, the supporting filter cotton 3, the filter rack 2 and the filter element rack 4 can be used for making the filter cotton 3, the filter rack 2 and the filter element rack 4 detachable.

It is to be noted that the filter element rack 4 is provided with a water passing hole, and the support rack 5 may be a hollow structure or a water passing structure configured to enable water falling on the support rack 5 to return to the bottom of the water tank 10 to prevent the filter element rack 4 and the support rack 5 from affecting the water filtered by the filter cotton 3 back to the bottom of the water tank 10.

## Claims

1. A pet water dispenser, comprising:
a water storage tray (1);
a filter rack (2), wherein the filter rack (2) is located below the water storage tray (1), the filter rack (2) is formed with a filter structure, and the filter structure is configured to receive and filter water overflowing from the water storage tray (1);
filter cotton (3), wherein a filtration precision of the filter structure is less than a filtration precision of the filter cotton (3), and the filter cotton (3) is configured to re-filter water filtered by the filter structure;
a water tank (10) located below the filter cotton (3); and
a water pump (6) configured to pump water within the water tank (10) to the water storage tray (1).

2. The pet water dispenser according to claim 1, wherein the filter rack (2) is provided with a plurality of through holes extending from top to bottom, and the plurality of through holes form the filter structure.

3. The pet water dispenser according to claim 1, wherein the water storage tray (1) is provided with a water overflow outlet (7), and the water overflow outlet (7) is higher than a lowest position of an inner wall of the water storage tray (1).

4. The pet water dispenser according to claim 3, wherein the filter rack (2) is inclined with respect to a horizontal direction, and a first end of the filter rack (2) close to the water overflow outlet (7) is higher than a second end of the filter rack (2) far away from the water overflow outlet (7).

5. The pet water dispenser according to claim 1, wherein the water storage tray (1) is disposed on a top of the water tank (10), and the filter rack (2) and the filter cotton (3) are disposed within the water tank (10).

6. The pet water dispenser according to claim 5, wherein the water storage tray (1) is detachably connected to the water tank (10), the filter rack (2) is detachably connected to the water tank (10), and a handle protrudes from one side of the filter rack (2) facing the water storage tray (1).

7. The pet water dispenser according to claim 5, wherein the water tank (10) comprises a lower housing (16) having a top opening and an upper cover (11) mounted onto the lower housing (16) to seal the top opening, and the water storage tray (1) is mounted onto the upper cover (11); and
the upper cover (11) is provided with a water inlet channel (12), a first end of the water inlet channel (12) horizontally extends into the water storage tray (1), a water outlet of the water pump (6) is connected to a water pipe (13), and a water outlet of the water pipe (13) communicates with the water inlet channel (12).

8. The pet water dispenser according to claim 7, wherein a second end of the water inlet channel (12) forms a water supply mouth (14), the water supply mouth (14) passes through the upper cover (11) along a vertical direction, and an upper end of the water pipe (13) communicates with the water supply mouth (14); and
the upper cover (11) is provided with a dust cover (15), and the dust cover (15) covers an end surface of a top opening of the water supply mouth (14).

9. The pet water dispenser according to claim 7, further comprising a filter element rack (4), wherein the filter element rack (4) is located under the filter cotton (3), a placement cavity (9) is formed between the filter element rack (4) and the filter cotton (3), and the placement cavity (9) is configured to place a charcoal pack.

10. The pet water dispenser according to claim 9, wherein the water tank (10) further comprises a support rack (5), the support rack (5) is connected to the lower housing (16), a circumferential edge of the filter element rack (4) is provided with a support flange, an inner wall of the support rack (5) is provided with a support surface, the support surface is configured to support the support flange, and a circumferential edge of the filter rack (2) presses a circumferential edge of the filter cotton (3) against an upper surface of the support flange.
